# EUROPEAN PATENT APPLICATION

(11) **EP 0 739 124 A2**
(43) Date of publication of application: **23.10.1996**
(21) Application number: 96200930.4
(22) Date of filing: 18.04.1996
(51) Int. Cl.: H04M 11/08

(54) **A translator device for receiving data from a telephone and displaying it on a television set**

(30) Priority: 21.04.1995 IT SP950003 U
(71) Applicant: Guerrini, Dario, 19123 La Spezia (IT)
(72) Inventor: Guerrini, Dario, 19123 La Spezia (IT)
(74) Representative: Falcetti, Carlo

(57) **Abstract**

A portable database-access device (1) translates electroacoustic signals received via a telephone line and representative of digital data into binary codes which are stored in a permanently-supplied memory (5) of the device and which can be displayed in real or deferred time as alphanumeric symbols displayed on an ordinary television screen connected to the device.

A connection (14, 15), controlled automatically or upon manual command, between the telephone line and a video-signal generator (6) of the device allows any vocal messages received via the telephone line to be heard "viva voce" in the real-time operative mode by means of the television set, at the same time as the digital data are displayed, for the execution of database-access procedures, guided by vocal messages.

## Description

The present invention relates to a device which can be connected to a telephone socket in parallel with a normal telephone; the device can receive various data in a fast and automatic procedure from a remote database to which it is connected by means of a normal telephone call, and can display the data in readable form on a normal television screen.

The development of technology in the telematics and telephonics fields today enables the ordinary telephone to be used in order to benefit from ever more convenient and sophisticated services, particularly for obtaining news or information of general or personal interest.

Systems applications in this sector are currently very diverse and offer users a variety of possibilities. Some simple examples such as telephonic alarm calls, telephonic news bulletins and, gradually, many other services run by public and private bodies which offer automatic information by means of the telephone, may be mentioned.

Recently, there has also been talk of personalized information services, that is, it is possible, by means of a telephone and with suitable procedures for protecting the confidentiality of the data supplied, to gain access to files and to receive confidential information therefrom.

A typical example of application is in the banking field; in fact, the ability to examine one's own current account balance, latest transactions, etc. is today a reality.

Although innovations of this type are very convenient, they have limited efficiency and functionality and, in practice, can be used only for a limited amount of information since it is not humanly possible to listen to, understand and memorize more than a certain number of words, particularly if they do not represent a conversation from which it suffices to infer the content, but a precise and ordered series of data, often of numerical type.

This problem has been solved by the use of expensive facsimile equipment which the user thus has to possess and on which he can receive, in written and indelible form, all of the data which, owing to its quantity, he would not be able to follow by means of an audio telephonic playback.

Another solution is the use of a modem connection effected by means of a terminal or personal computer which the user thus has to possess and know how to use confidently to gain access to telematics networks.

Another solution which should be mentioned and which is similar to the previous one consists of video text (Videotel) services with which the user can gain access to databases by means of a telephone line and modem and can obtain images displayed on a television screen.

In order to use these services, however, it is necessary to have suitable video terminals or relatively complex and expensive adaptation equipment which, in fact, has discouraged the spread of these services on the market.

The limitations of the two basic types of solution proposed may be summarised thus:

Telematics services using solely the telephone: these are based on vocal communications with the single and limited possibility of interaction offered by the telephone.

Video-telephonic telematics services using local terminals or personal computers; these are based on communications which are solely displayed and require an interactive terminal; the telephone serves solely for the selection of the access node and the establishment of the connection.

Vocal communications by means of the telephone and interactive control with the use of the same instrument are excluded since control has to take place by means of a suitable keyboard.

The solutions mentioned do not, however, satisfy the requirements of the great majority of telephone users who are private individuals in the general sense and who do not have facsimile equipment, personal computers, or other accessories, with which they are often not familiar and which they would in any case not have the intention of acquiring solely in order to be able to make better use of telephonic information services at home.

There is therefore a need to provide a simple and cheap device which can receive data by telephone and display it on an ordinary television screen, which is compact and easy to operate, and which can receive various data by means of a simple telephone call and is capable of storing it and displaying it at will in a clear and readable form on an ordinary domestic television screen, even at a subsequent time, and which offers the possibility of receiving not only visual messages but also sound messages.

This need is satisfied by the device of the present invention which may be produced in various forms and with many electronic and mechanical options but which, conceptually and above all, can perform, in an integrated manner, the task of decoding electroacoustic signals coming from the telephone line and forming therewith one or more video images containing alphanumeric characters.

The video images constructed- are sent to a radio-frequency modulator conforming to the television standards for transmission on a predetermined channel frequency and integrated in the device; the high-frequency signal obtained can be input through the aerial socket of the domestic television set by the connection of the appropriate coaxial connector with which it is provided; the television set simply has to be tuned only once to the channel which can receive the signal input.

The device of the present invention may also have a small aerial for transmitting the high-frequency signal through the air to be received directly by the television set which is disposed at a distance of a few metres, but this is upon the condition that the output power is kept within the limits allowed by law without the need for special authorization.

The device proposed cannot be confused with other systems for transmitting video images by telephone means since it corresponds to the following characteristics:
- it does not need video terminals which are specialized or adapted in any way;
- it does not need special telephonic equipment;
- it has a low production cost and is thus suitable for wide distribution;
- it has a low running cost since the data are transmitted in compact and rational form (solely the coherent data and not the empty spaces);
- it can receive and display several video images containing data;
- it keeps the images stored until the next connection, they can therefore be seen or reviewed on the TV on several deferred occasions and the execution of the transaction can take place and be guided with the aid solely of the telephone;
- it is extremely flexible since it operates both with DTMF tones and with other types of modulation usable for transferring data on telephone channels, and can therefore be used easily by all constructors of telephone systems for interrogating databases without the need to adopt new technology but simply by revising the telephonic interaction software programmes;
- it enables interactive commands to be sent by means of the telephone keypad, if it is of the tone key type or, preferably, in the case of telephone equipment with a dial, by means of a control system by pointing to a menu displayed on the television screen, and thus with the use of a keypad with a small number of keys, for example three, for pointing and activating a cursor and, possibly, even with the use of the same infrared remote control as that used for the television set or an equivalent remote control;
- the device also enables the same telephone line to be switched to the audio channel of the television set so that any messages or communications can be heard on the television set "viva voce" without the handset being held to the ear; the switching is automatic as a result of the arrival of signals but can also be effected manually by means of a suitable push-button;
- in order to protect personal data in applications where this is necessary, the device can receive cryptographic data from the database to which it is connected.

Essentially, the device of the invention forms a bridge between telematics systems which are based solely on the telephone and telematics services displaying images, enabling the former to be controlled in conventional interactive manner and at the same time providing data for images, and enabling the latter to interact with the further aid of vocal messages.

The characteristics and advantages of the device of the present invention will become clearer from the following description of a preferred embodiment given with reference to the appended drawings, in which:
Figure 1 is a block diagram showing the architecture of the video-telephonic translator device of the present invention,
Figure 2 is a simplified side view of an embodiment of the device of Figure 1,
Figure 3 is a front view of the device of Figure 2.

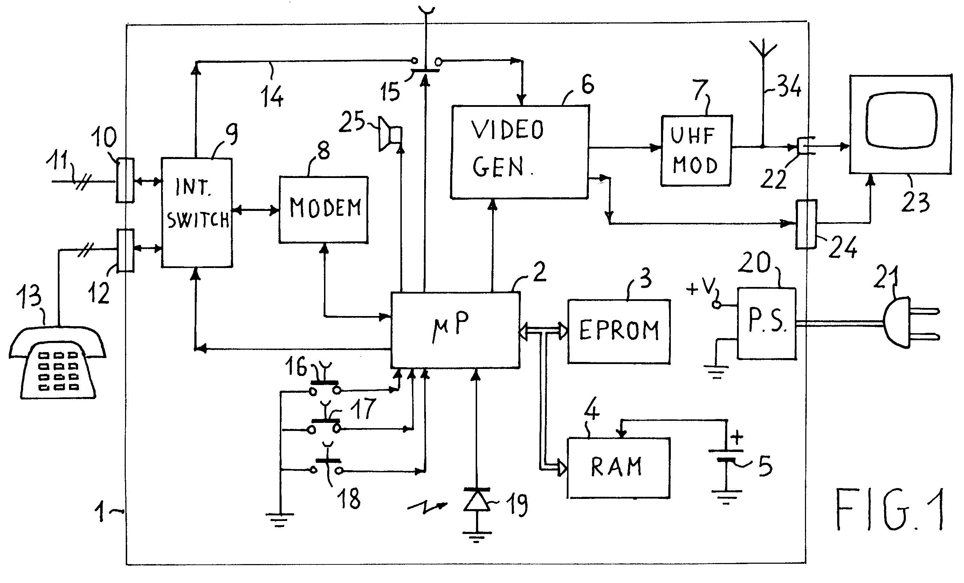

With reference to Figure 1, a telephone-to-video data-translator device 1 according to the present invention comprises, essentially:
- a microprocessor 2,
- permanent storage 3, preferably an EPROM erasable and writable memory; all of the firmware control and management routines of the device are stored permanently in the EPROM memory,
- RAM random-access static storage 4 with a buffer supply battery 4, which may be rechargeable, for storing variable data received from the telephone line and parameters set on an external control for controlling the device,
- a video-signal generator 6,
- a high-frequency modulator UHFMOD 7,
- a modem 8 for interconnection to the telephone line,
- a module 9 for interfacing with the telephone line, connected to the telephone line 11 by means of a first standard telephone connector 10 and to a telephone 13 by means of a second standard telephone connector 12.

Essentially, this module has the function of a galvanic isolator isolating the telephone line and the telephone from the electrical circuits of the device, and of a selective coupling switch controlled by the microprocessor 2 in order to connect the modem 8 to the line 11 when this is transmitting and simultaneously to disconnect the telephone 13.

It also has the function of connecting the telephone line to a predetermined impedance to keep the communication with the device active even if the telephone handset 13 is put down, in which case the communication is deactivated automatically upon completion of the exchange of messages, upon receipt of a predetermined command (ESCAPE) and/or by time-out.

The signals received by the telephone line are transferred to the modem 8 permanently by the interface module 9.

They are also input to the video-signal generator 6 by means of a wire 14 and a switch 15.

The device is completed by suitable control means represented by three push-buttons 16, 17, 18 and by an infrared photodetector 19, a supply 20 with a mains-connection plug 21, for generating a direct-current voltage for supplying the various components (the supply may be replaced by rechargeable batteries with a recharging supply integral with or outside the device) and at least one coaxial aerial connector 22 for connecting the output of the modulator 7 to the aerial socket of a normal television set 23.

Instead of or in addition to the connector 22, a SCART (or even a MINIDIN) television connector 24 may be connected to the output of the video-signal generator 6 for direct connection to the television monitor.

A sound and/or light indicator 25 is also provided and is controlled (also indirectly, in known manner, with the interposition of other components such as latching registers) by the microprocessor 2.

All of these components are normally obtainable commercially and do not require detailed description.

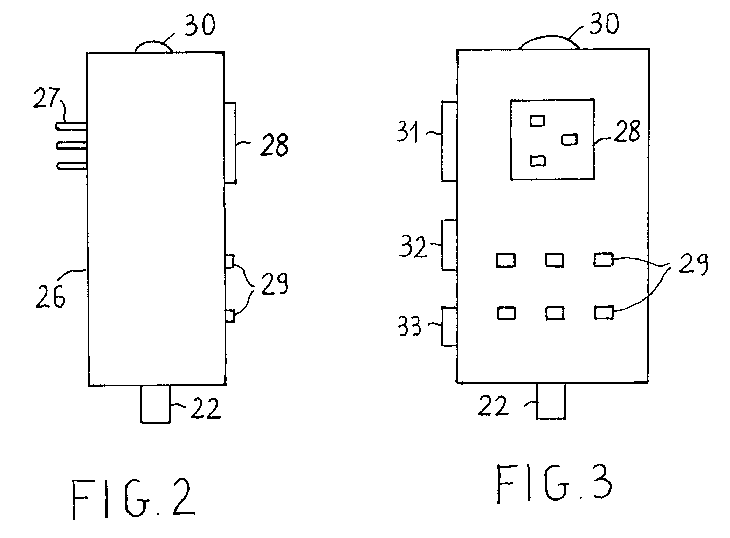

The device may be produced in compact and cheap form and housed in a small container 26 a side view and a front view of which are shown, for example, in Figures 2 and 3, respectively.

By way of indication, the dimensions may be of the order of 40 x 60 x 100 mm or a little more.

Conventional pins 27 may be provided on the rear wall of the container for insertion in a standard telephone socket and may be replaced, if necessary, by a flexible telephone connection cable terminating in a standard telephone connector. On the front, there is a socket 28 for connection to a standard plug for telephone equipment.

Also on the front are indicators and control push-buttons 29 (for example, such as the push-buttons 16, 17, 18 of Figure 1).

On the side walls there are: the coaxial connector 22 for the television, a transparent window 30 for the excitation of the infrared photodetector 19 (Figure 1) and optional serial and parallel interface connectors (for connection to PCs or printers) and SCART connector 31, 32, 33.

The functioning and the operative modes of the device of Figure 1, which are many and versatile, will now be described.
1. First of all, the simplest case of the acquisition of data and its deferred display on the television screen will be considered.
   The device 1 is connected between the telephone line and the telephone, which is assumed to be of the type with keys for selecting the number called by DTMF code. As is known, the DTMF code is a code of four successive pulses each of which is modulated at one of two different frequencies (2040/2400 Hz).
   The user selects the number and is connected to the automatic information system (the database).
   The computer of the automatic data system responds with vocal messages which are pre-recorded or are generated by a vocal synthesizer and which guide the user in the transaction required.
   In general, the automatic system invites the user to identify himself by a personal code which the user transmits by pressing the keys of the telephone in the appropriate sequence.
   When recognition has taken place, the automatic system invites the user, in the same manner, by a hierarchical identification process, to identify the type of information required.
   The operation is carried out by the pressing of the telephone keys specified by the automatic system.
   Up to here, the process is known, but at this point, instead of responding to the request with vocal messages, the automatic system advises the user that the data requested are ready to be sent in modulated digital form and, if necessary, also encrypted.
   The device 1, which is listening, that is, is arranged to receive the data and can discriminate between data and vocal messages, starts to receive the messages transmitted, decodes them and stores them, character by character, in its RAM memory which, advantageously, has a capacity of the order of 100 kbytes, and is thus sufficient to store more than one hundred video pages each containing 24 lines of 40 characters.
   During the receipt of the messages, the user can also put down the handset as in a normal modem connection procedure; the translator device keeps the communication active throughout the time necessary.
   When all of the data have been received, of which the translator device can be informed by suitable end of transmission (ESCAPE) codes, the translator device emits a sound signal.
   The automatic system may also send a vocal end of transmission message which is received by the user if he is still listening.
   At this point, the translator device may be disconnected from the telephone, if necessary, and connected to the aerial socket of a normal television set, preferably with the aerial wire disconnected to prevent possible intrusion and access to the data via the aerial wire.
   The activation of the translator device enables the various pages of data to be displayed in a controlled manner on the television screen, one at a time, for the desired time.
   The pages displayed can be changed sequentially simply by the pressing of a button (for example, one of the push-buttons 16, 17, 18 of Figure 1).
   Alternatively, an index "menu" may be displayed for cyclic searching by a cursor controlled by one of the push-buttons 16, 17, 18, whilst another button confirms the selection made on the index.
   As a further variant, the same effects can be achieved by an ordinary television remote control pointed at the photodetector of the translator device instead of at the television.
   The association between the various commands transmitted by the remote control and the various operations performed by the translator device can be defined by an initialization procedure which is carried out once and for all, although it can be renewed and modified periodically, and which associates the various signals transmitted by the remote control with corresponding commands generated by the pressing of buttons of the device.
   The table of associations can be stored in a region reserved in the RAM memory.
   The translator device can thus be arranged to interact with a remote control of any type and does not require a special remote control.
2. The case of the acquisition of data with its simultaneous display on the television screen will now be considered.

The acquisition can be effected as in the previous case with the use of a telephone provided with keys for selecting the number called by means of DTMF vocal codes and requires only that the translator be connected simultaneously to the telephone and to the television set.

In this case, instead of using the telephone handset for receiving vocal messages, the user may receive the vocal messages transferred to the television set by the line 14, by the video-signal generator 6, and by the modulator 7 (Figure 1), by means of the television loud speaker.

The use of the translator device is thus freed from the need to have the telephone handset available and to interact therewith.

Even more importantly, however, the constraint constituted by a telephone with keys is eliminated and it is possible to use a conventional telephone with a dial.

Having made the call, the user can listen to vocal guidance messages received by means of the television loud speaker.

At the same time, the translator device can display on the screen a schematic image of an alphanumeric keyboard and a cursor for selecting alphanumeric characters, the position and activation of the cursor being controlled either by the buttons of the translator device or by an ordinary television remote control pointed at the device.

In this case, the translator device itself replaces the telephone keypad in sending information to the central automatic system with the use, for example, of the same DTMF tone system as that used by telephones.

The tone code transmitted corresponds to the key identified and pressed at the time in question on the "virtual" keyboard which appears on the television screen.

It should be noted that the DTMF tone system can be "expanded" to transmit codes representing a number of alphanumeric characters greater than 16; a pair of DTMF tone codes sent in succession is in fact equivalent to an 8-bit code which can identify up to 256 alphanumeric characters.

The DTMF tone system, which is preferable for reasons of compatibility with existing automatic systems which make use of this system, is not exclusive; clearly different modulation techniques and different data-transfer speeds compatible with the transmission vehicle constituted by the switched telephone line may be used.

Once the request for information has been correctly set with the aid of the television set used as a "virtual" keyboard, the automatic system sends the data requested via the telephone line.

The data are received by the translator device which decodes them and displays them on the television screen, at the same time storing them, as in the previous case.

If the remote data system is of the type which interacts with the user by means of menu images transmitted via the telephone line, these are received by the translator device and displayed on the television screen.

In the methods already seen, the user can then respond to the automatic system with the aid of the buttons of the device or of the remote control, with his identification code and with codes which identify the data requested.

In this case, the "audio" function of the device is unnecessary and may deliberately be switched off by the user by the manual opening of the switch 15 (Figure 1).

The device described, in its simplicity, is therefore extremely versatile and functional, is suitable for acquiring data from automatic systems of various types, and does not require any particular kind of telephone or television equipment to operate.

In the case of vocal automatic data-distribution systems, it requires no modification of the communication protocols already defined but only the addition to these systems of the function for sending data in coded, modulated and, possibly, also encrypted form, which is advantageous with regard to the confidentiality of the data.

In the case of video text data-distribution systems, it is perfectly compatible with these without the need for a dedicated television terminal or adaptations of the television set.

In both cases, the functions of the service can be expanded by the integration of vocal interactions with interactions by means of a keyboard, which may be a virtual keyboard.

It should be pointed out that, apart from its use for acquiring information from databases via the telephone, a device of the type described offers, without any additional cost, the "viva voce" function for sound messages received in the course of any telephone communication.

The foregoing description relates solely to a preferred embodiment and, clearly, many variations may be applied.

As already stated, for improved portability of the device, it may have a transmitting aerial 34 (Figure 1) for connecting it to the television set through the air, instead of a coaxial connector.

Naturally, this is achieved to the detriment of confidentiality.

As a further variant, the device may be designed as an integral portion of a portable telephone of the type in which a fixed portion is connected to the telephone line and to the mains supply and is in radio communication with a mobile portion which houses the microphone, earphone and keypad.

In this case, the fixed portion of the telephone may house all of the components of the translator device already seen with reference to Figure 1, with the sole exception of the control push-buttons 16, 17, 18, the function of which can easily be performed by the control buttons incorporated in the mobile portion of the telephone which may also correspond to buttons already provided for other functions.

The fixed portion of the telephone may be connected permanently to the television set (preferably by means of an aerial switch to ensure confidentiality of the data) so that the user can conveniently operate with the mobile portion even in a location remote from the fixed portion and, at the same time, see the data sent by the remote automatic system and listen to the messages sent thereby, by means of the television set.

If the device according to the invention is provided with a microphone connected to the output of the telephone line of the device by means of the interface module 9 (Figure 1) which may comprise the necessary anti-sidetone circuits when used as described above, in combination with an ordinary domestic television set, it can in fact be used as a normal telephone and thus constitute a virtual "viva voce" telephone.

The picking-up of the telephone handset (OFF HOOK) in order to connect the line can be simulated, as in portable phones, by the operation of a push-button (even a virtual push-button displayed on the television screen) which connects the telephone line to an impedance of predetermined value.

The device can then in fact replace a normal telephone.

Clearly, if the device can be used as an alternative to a telephone connected to the same line and not to replace it, the telephone should be connected to the line with the interposition of the device so that the interface module of the device can in any case connect the telephone line to the necessary impedance both when the device alone is active and when the telephone is also in the call condition.

In accordance with the standards for connection to the telephone network, a device of this type may be incorporated as an integral part or as an option in an ordinary domestic television set and/or video recorder without the need for circuit modifications of the device or of the equipment or approval of the entire apparatus, enabling the equipment to function as a virtual telephone.

## Claims

1. A portable device for receiving data relating to intelligible texts, which may be encrypted, from a telephone line, in the form of electroacoustic signals and for displaying the data on an ordinary television screen simultaneously with their receipt or at a deferred time, comprising:
- first connection means (10, 9, 8, 12) for connection to the telephone line and to a telephone in order to receive the data, and
- means (2, 3, 6) for processing the data in order to generate, from the data, a standardized video television signal,
characterized in that it comprises
- second connection means (7, 22, 24) for connection to a standard input of a conventional television set,
- storage means (4) for storing a plurality of data representative of a plurality of video images,
- uninterrupted supply means (5) for the storage means, and
- control means (16, 17, 18, 19) for controlling the processing means (2, 3, 6) in order to generate a standardized radio television signal representative of at least a predetermined one of the said video images.

2. A device according to Claim 1, in which the second connection means (7, 22, 24) comprise a UHF high-frequency modulator (7).

3. A device according to Claim 2 in which the second connection means (7, 22, 24) comprise a transmitting aerial.

4. A device according to any one of Claims 1, 2 and 3, comprising third connection means (31, 32) for connecting the device to external equipment with a standardized serial or parallel interface, the processing means (2, 3) being controllable by the control means (16, 17, 18, 19) in order to read data stored in the storage means and to display the data on the external equipment by means of the third connection means (31, 32).

5. A device according to any one of Claims 1, 2, 3 and 4, comprising means (14, 15) for channelling an audio signal received by the first means (10, 9) to the processing means (6) in order to generate a composite video signal also including an audio band, the channelling means (14, 15) being capable of being activated and de-activated automatically and/or upon manual command so that the user can operate in direct mode instead of in deferred mode and can listen to messages as well as seeing the data by means of the television set, whilst he can send commands by means of the telephone keypad.

6. A device according to Claim 5, in which the first connection means (8, 9) and the processing means (2, 3, 6) can be controlled by the control means (16, 17, 18, 19) to send data towards the telephone line, possibly with the aid of a virtual keyboard simulated by the processing means (2, 3, 6) and displayed by a television set connected to the device.

7. A device according to the preceding claims, in which the connection means (8, 9, 10) receive and/or transmit data coded in the DTMF standard.

8. A device according to the preceding claims integrated in the fixed portion of a portable telephone of the "cordless" type with a mobile portion which is in radio communication with the fixed portion.

9. A device according to the preceding claims, integrated in a domestic television set and/or video recorder.

10. A device according to the preceding claims, provided with an internal microphone in order to operate, in association with a television set, as a virtual "viva voce" telephone.
